# EUROPEAN PATENT APPLICATION

(11) **EP 1 965 519 A1**
(43) Date of publication of application: **03.09.2008**
(21) Application number: 08003145.3
(22) Date of filing: 20.02.2008
(51) Int. Cl.: H04B 10/155, H04B 10/158

(54) **Optical receiver and optical transmitter**

(30) Priority: 28.02.2007 JP 2007049231
(71) Applicant: Yokogawa Electric Corporation, Tokyo 180-8750 (JP)
(72) Inventor: Asano, Tetsuri, Musashino-shi Tokyo 180-8750 (JP)
(74) Representative: Grünecker, Kinkeldey, Stockmair & Schwanhäusser Anwaltssozietät

(57) **Abstract**

An optical receiver for receiving a transmission light signal which is subjected to an optical phase modulation based on a data signal to be transmitted and has a dither signal superposed thereon includes a delay interferometer to which the transmission light signal having the dither signal superposed thereon is applied and which converts the transmission light signal into a light intensity modulation signal based on a control signal, a photodetector for converting two light outputs of the delay interferometer into an electric signal, two current detecting sections for differentially detecting a photocurrent flowing to the photodetector as a detection voltage, a data clock reproducing section for outputting the data signal and a clock signal based on an output of the photodetector, two filter sections for extracting dither signal components of the differential detection voltages respectively, and a control section for determining the control signal and applying the control signal to the delay interferometer in such a manner that one of the differential detection voltages is a maximum and the other is a minimum, and both of the dither signal components which are extracted have a minimum amplitude.

## Description

This application claims priority to Japanese Patent Application No. 2007-049231, filed February 28, 2007, in the Japanese Patent Office. The Japanese Patent Application No. 2007-049231 is incorporated by reference in its entirety.

### TECHNICAL FIELD

The present disclosure relates to an optical receiver for receiving a transmission light signal subjected to an optical phase modulation based on a data signal to be transmitted. More particularly, the present disclosure relates to an optical receiver which can stably receive a transmission light signal without modulating a control signal of a delay interferometer, and an optical transmitter.

### RELATED ART

The following prior art documents relate to a conventional optical receiver for receiving a transmission light signal subjected to an optical phase modulation based on a data signal to be transmitted.

[Patent Document 1] JP-A-2006-217605 Publication
[Patent Document 2] JP-A-2006-295603 Publication
[Patent Document 3] JP-A-2006-352678 Publication
[Patent Document 4] JP-A-2007-013761 Publication

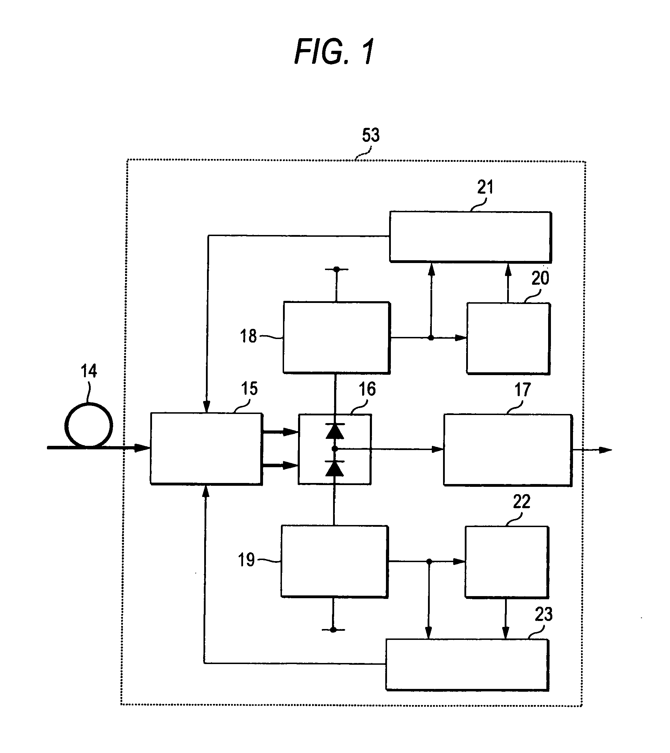

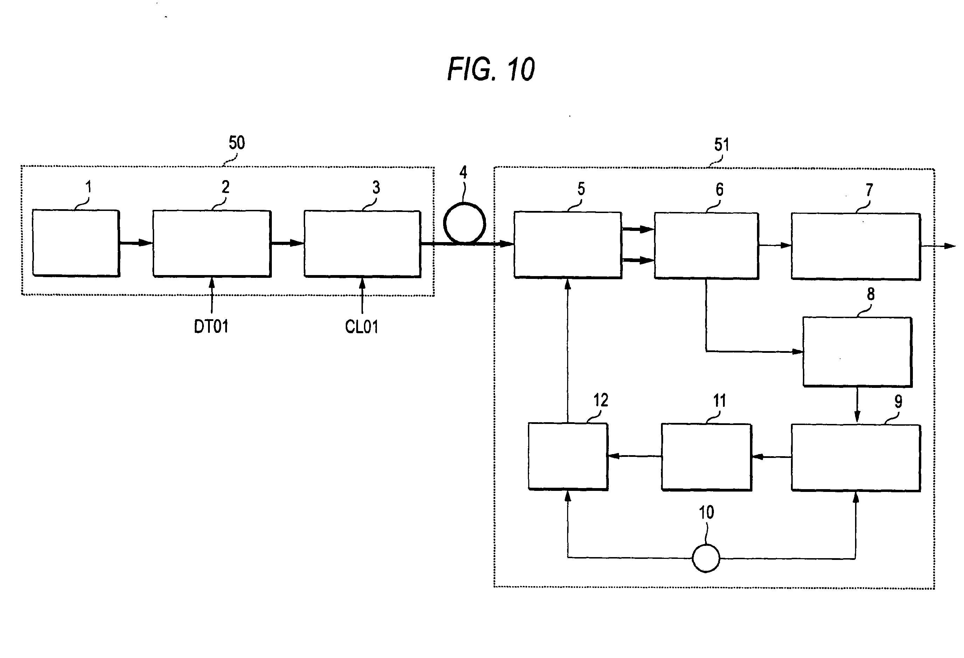

Fig. 10 is a block diagram showing a structure according to an example of a conventional optical receiver. In Fig. 10, 1 denotes a light source such as a laser beam source, 2 denotes a phase modulating section for carrying out an optical phase modulation over an input light signal based on a data signal, 3 denotes an intensity modulating section for carrying out a light intensity modulation over an input light signal based on a clock signal, 4 denotes an optical transmission line such as an optical fiber, 5 denotes a delay interferometer, 6 denotes a photodetecting section such as a photodetector of a balance type in which photodetectors are connected in series, 7 denotes a data clock reproducing section for reproducing and outputting a data signal and a clock signal based on an output of the photodetecting section 6, 8 denotes a power detecting section for detecting a power based on the output of the photodetecting section 6, 9 denotes a synchronous detecting section, 10 denotes an oscillator for generating a modulation signal, 11 denotes a control section, and 12 denotes an adder.

Moreover, 1, 2 and 3 constitute an optical transmitter 50 and 5, 6, 7, 8, 9, 10, 11 and 12 constitute an optical receiver 51.

An output light of the light source 1 is incident on the phase modulating section 2 and a light emitted from the phase modulating section 2 is incident on the intensity modulating section 3. A light emitted from the intensity modulating section 3 is incident on the delay interferometer 5 through the optical transmission line 4.

Two lights emitted from the delay interferometer 5 are incident on individual photodetectors constituting the photodetecting section 6 respectively, and two detection signals of the photodetecting section 6 are applied to input terminals of the data clock reproducing section 7 and the power detecting section 8 respectively.

An output of the power detecting section 8 is applied to a signal input terminal of the synchronous detecting section 9, and an output of the oscillator 10 is applied to a synchronization signal input terminal of the synchronous detecting section 9. An output of the synchronous detecting section 9 is applied to an input terminal of the control section 11 and a control signal of the control section 11 is applied to one of input terminals of the adder 12.

A modulation signal to be an output of the oscillator 10 is applied to the other input terminal of the adder 12 and an output of the adder 12 is applied to a control input terminal of the delay interferometer 5. Moreover, a data signal indicated as "DT01" in Fig. 10 is applied to a control input terminal of the phase modulating section 2 and a clock signal indicated as "CL01" in Fig. 10 is applied to a control input terminal of the intensity modulating section 3.

Description will be given to an operation in the conventional example shown in Fig. 10. In the optical transmitter 50, the output light of the light source 1 is subjected to a phase modulation based on the data signal indicated as "DT01" in Fig. 10 through the phase modulating section 2 and is changed into an optical pulse based on the clock signal indicated as "CL01" in Fig. 10 through the intensity modulating section 3, and is emitted as a transmission light signal to the optical transmission line 4.

On the other hand, in the optical receiver 51, the transmission light signal (an optical phase modulation signal) propagated through the optical transmission line 4 is converted into a light intensity modulation signal based on a control signal through the delay interferometer 5 and the light intensity modulation signal is input to the photodetecting section 6. At this time, the control signal of the delay interferometer 5 is modulated with the output signal of the oscillator 10. Therefore, the light intensity modulation signal thus converted is also modulated with the output signal of the oscillator 10.

The data clock reproducing section 7 reproduces and outputs the data signal and the clock signal based on one of the outputs of the photodetecting section 6. Moreover, the other output of the photodetecting section 6 is detected as a light signal power in the power detecting section 8 and is synchronously detected based on the output signal of the oscillator 10 through the synchronous detecting section 9.

The control section 11 generates a control signal based on the synchronous detection signal of the synchronous detecting section 9, and is modulated with the output signal of the oscillator 10 through the adder 12 and is applied to the control input terminal of the delay interferometer 5, thereby controlling the delay interferometer 5.

As a result, the transmission light signal (the optical phase modulation signal) is converted into the light intensity modulation signal based on the control signal through the delay interferometer and the control signal of the delay interferometer is modulated, and the light signal power which is detected is synchronously detected to control the delay interferometer so that the transmission light signal (the optical phase modulation signal) can be stably received.

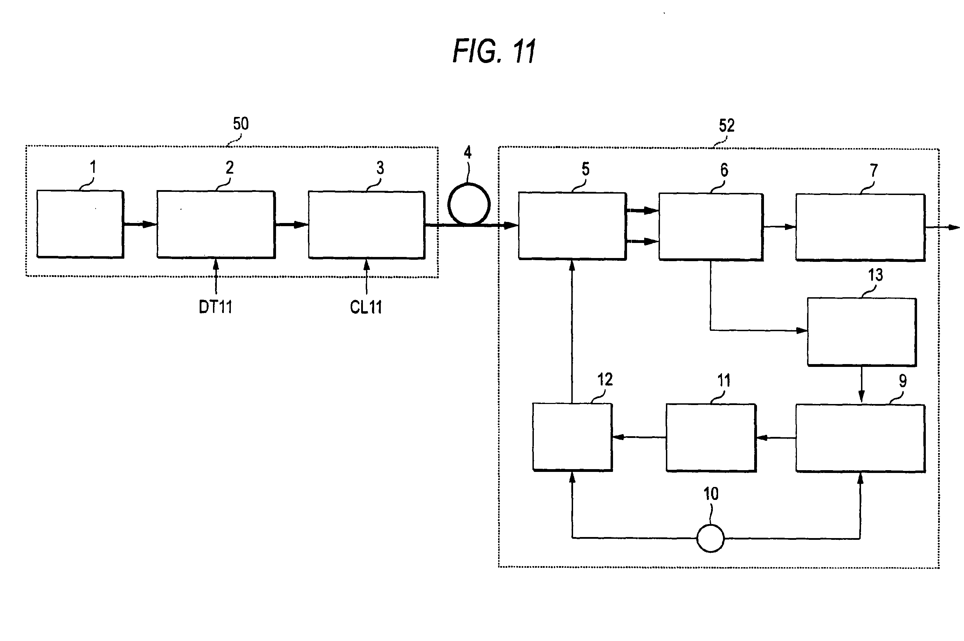

Moreover, Fig. 11 is a block diagram showing a structure according to another example of the conventional optical receiver. In Fig. 11, 1, 2, 3, 4, 5, 6, 7, 9, 10, 11, 12 and 50 are the same reference numerals as those in Fig. 10, and 13 denotes a filter section such as a bandpass filter. Furthermore, 5, 6, 7, 9, 10, 11, 12 and 13 constitute an optical receiver 52.

An output light of a light source 1 is incident on phase modulating section 2 and a light emitted from the phase modulating section 2 is incident on intensity modulating section 3. A light emitted from the intensity modulating section 3 is incident on a delay interferometer 5 through an optical transmission line 4.

Two lights emitted from the delay interferometer 5 are incident on individual photodetectors constituting photodetecting section 6 respectively, and two detection signals of the photodetecting section 6 are applied to input terminals of data clock reproducing section 7 and filter section 13 respectively.

An output of the filter section 13 is applied to a signal input terminal of synchronous detecting section 9, and an output of an oscillator 10 is applied to a synchronization signal input terminal of the synchronous detecting section 9. An output of the synchronous detecting section 9 is applied to an input terminal of control section 11 and a control signal of the control section 11 is applied to one of input terminals of an adder 12.

A modulation signal to be an output of the oscillator 10 is applied to the other input terminal of the adder 12 and an output of the adder 12 is applied to a control input terminal of the delay interferometer 5. Moreover, a data signal indicated as "DT11" in Fig. 11 is applied to a control input terminal of the phase modulating section 2 and a clock signal indicated as "CL11" in Fig. 11 is applied to a control input terminal of the intensity modulating section 3.

Description will be given to an operation according to the conventional example shown in Fig. 11. In an optical transmitter 50, the output light of the light source 1 is subjected to a phase modulation based on the data signal indicated as "DT11" in Fig. 11 through the phase modulating section 2 and is changed into an optical pulse based on the clock signal indicated as "CL11" in Fig. 11 through the intensity modulating section 3, and is emitted as a transmission light signal to the optical transmission line 4.

On the other hand, in an optical receiver 51, the transmission light signal (an optical phase modulation signal) propagated through the optical transmission line 4 is converted into a light intensity modulation signal based on a control signal through the delay interferometer 5 and the light intensity modulation signal is input to the photodetecting section 6. At this time, the control signal of the delay interferometer 5 is modulated with the output signal of the oscillator 10. Therefore, the light intensity modulation signal thus converted is also modulated with the output signal of the oscillator 10.

The data clock reproducing section 7 reproduces and outputs the data signal and the clock signal based on one of the outputs of the photodetecting section 6. Through the other output of the photodetecting section 6, moreover, a frequency component of the output signal of the oscillator 10 is extracted in the filter section 13 and is synchronously detected based on the output signal of the oscillator 10 through the synchronous detecting section 9.

The control section 11 generates a control signal based on the synchronous detection signal of the synchronous detecting section 9, and is modulated with the output signal of the oscillator 10 through the adder 12 and is applied to the control input terminal of the delay interferometer 5, thereby controlling the delay interferometer 5.

As a result, the transmission light signal (the optical phase modulation signal) is converted into the light intensity modulation signal based on the control signal through the delay interferometer and the control signal of the delay interferometer is modulated, and the frequency component of the output signal of the oscillator 10 which is extracted is synchronously detected to control the delay interferometer so that the transmission light signal (the optical phase modulation signal) can be stably received.

In the conventional examples shown in Figs. 10 and 11, however, an optical line length of the delay interferometer 5 is controlled with the control signal (a control voltage) modulated with the output single of the oscillator 10. In general, an optical medium constituting the delay interferometer 5 is glass or air. For this reason, there is a problem in that a responsiveness to a change in the control signal (the control voltage) is delayed and a control establishing time cannot be shortened.

Moreover, it is necessary to strictly control a temperature of the whole delay interferometer. Therefore, there is a problem in that a scale of the receiver is increased.

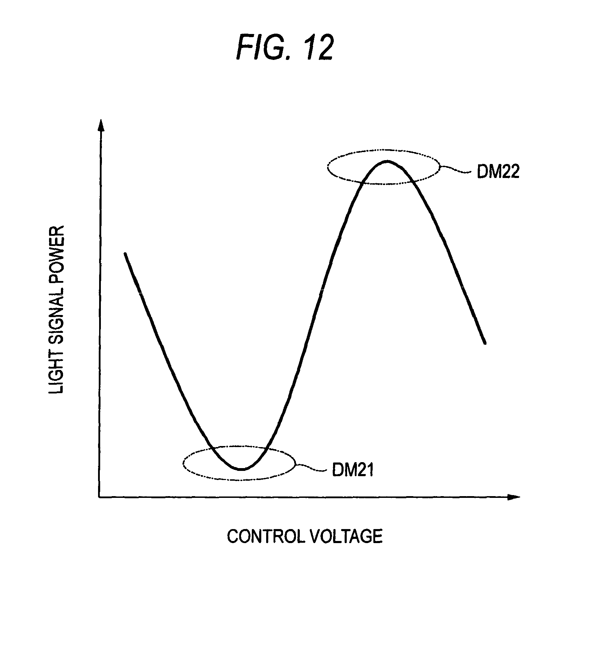

Furthermore, Fig. 12 is a characteristic curve chart showing a relationship between a control signal (a control voltage) and a light signal power obtained after a passage through the delay interferometer. In the conventional example shown in Fig. 10, the delay interferometer is controlled in regions indicated as "DM21" and "DM22" in Fig. 12 in some cases. In these cases, a variation in the light signal power with respect to the control signal (the control voltage) is small. In other words, there is a problem in that a detection sensitivity of an optimum point for stably receiving a transmission light signal (an optical phase modulation signal) is low and it is hard to stably receive the transmission light signal (the optical phase modulation signal).

### SUMMARY

Exemplary embodiments of the present invention an optical receiver which can stably receive a transmission light signal without modulating a control signal of a delay interferometer, and an optical transmitter.
A first aspect of the invention is directed to an optical receiver for receiving a transmission light signal which is subjected to an optical phase modulation based on a data signal to be transmitted and has a dither signal superposed thereon, comprising:
a delay interferometer to which the transmission light signal having the dither signal superposed thereon is applied and which converts the transmission light signal into a light intensity modulation signal based on a control signal; a photodetector for converting two light outputs of the delay interferometer-into an electric signal; first and second current detecting sections for differentially detecting a photocurrent flowing to the photodetector as a detection voltage; a data clock reproducing section for outputting the data signal and a clock signal based on an output of the photodetector; first and second filter sections for extracting dither signal components of outputs of the first and second current detecting sections respectively; and a control section for determining the control signal and applying the control signal to the delay interferometer in such a manner that one of the differential detection voltages is a maximum and the other is a minimum, and both of the dither signal components which are extracted have a minimum amplitude. Consequently, it is possible to stably receive the transmission light signal without modulating the control signal of the delay interferometer.

A second aspect of the invention is directed to an optical receiver for receiving a transmission light signal which is subjected to an optical phase modulation based on a data signal to be transmitted and has a dither signal superposed thereon, comprising:
a delay interferometer to which the transmission light signal having the dither signal superposed thereon is applied and which converts the transmission light signal into a light intensity modulation signal based on a control signal; a photodetector for converting two light outputs of the delay interferometer into an electric signal; first and second current detecting sections for differentially detecting a photocurrent flowing to the photodetector as a detection voltage; a data clock reproducing section for outputting the data signal and a clock signal based on an output of the photodetector; first and second filter sections for extracting dither signal components of outputs of the first and second current detecting sections respectively; and a control section for determining the control signal and applying the control signal to the delay interferometer in such a manner that both of the dither signal components which are extracted have a minimum amplitude. Consequently, it is possible to stably receive the transmission light signal without modulating the control signal of the delay interferometer.

A third aspect of the invention is directed to an optical receiver for receiving a transmission light signal which is subjected to an optical phase modulation based on a data signal to be transmitted and has a dither signal superposed thereon, comprising:
a delay interferometer to which the transmission light signal having the dither signal superposed thereon is applied and which converts the transmission light signal into a light intensity modulation signal based on a control signal; a photodetector for converting two light outputs of the delay interferometer into an electric signal; first and second current detecting sections for differentially detecting a photocurrent flowing to the photodetector as a detection voltage; a data clock reproducing section for outputting the data signal and a clock signal based on an output of the photodetector; and a control section for determining the control signal and applying the control signal to the delay interferometer in such a manner that one of the differential detection voltages is a maximum and the other is a minimum. Consequently, it is possible to stably receive the transmission light signal without modulating the control signal of the delay interferometer.

A fourth aspect of the invention is directed to an optical receiver for receiving a transmission lightsignal which is subjected to an optical phase modulation based on a data signal to be transmitted, comprising:
a modulator for superposing a dither signal on the transmission light signal based on an output of an oscillator; a delay interferometer for converting an output of the modulator into a light intensity modulation signal based on a control signal; a photodetector for converting two light outputs of the delay interferometer into an electric signal; first and second current detecting sections for differentially detecting a photocurrent flowing to the photodetector as a detection voltage; a data clock reproducing section for outputting the data signal and a clock signal based on an output of the photodetector; first and second filter sections for extracting dither signal components of outputs of the first and second current detecting sections respectively; and a control section for determining the control signal and applying the control signal to the delay interferometer in such a manner that one of the differential detection voltages is a maximum and the other is a minimum, and both of the dither signal components which are extracted have a minimum amplitude. Consequently, it is possible to stably receive the transmission light signal without modulating the control signal of the delay interferometer.

A fifth aspect of the invention is directed to an optical receiver for receiving a transmission light signal which is subjected to an optical phase modulation based on a data signal to be transmitted, comprising:
a modulator for superposing a dither signal on the transmission light signal based on an output of an oscillator; a delay interferometer for converting an output of the modulator into a light intensity modulation signal based on a control signal; a photodetector for converting two light outputs of the delay interferometer into an electric signal; first and second current detecting sections for differentially detecting a photocurrent flowing to the photodetector as a detection voltage; a data clock reproducing section for outputting the data signal and a clock signal based on an output of the photodetector; first and second filter sections for extracting dither signal components of outputs of the first and second current detecting sections respectively; and a control section for determining the control signal and applying the control signal to the delay interferometer in such a manner that both of the dither signal components which are extracted have a minimum amplitude. Consequently, it is possible to stably receive the transmission light signal without modulating the control signal of the delay interferometer.

A sixth aspect of the invention is directed to an optical receiver for receiving a transmission light signal which is subjected to an optical phase modulation based on a data signal to be transmitted, comprising:
a modulator for superposing a dither signal on the transmission light signal based on an output of an oscillator; a delay interferometer for converting an output of the modulator into a light intensity modulation signal based on a control signal; a photodetector for converting two light outputs of the delay interferometer into an electric signal; first and second current detecting sections for differentially detecting a photocurrent flowing to the photodetector as a detection voltage; a data clock reproducing section for outputting the data signal and a clock signal based on an output of the photodetector; and a control section for determining the control signal and applying the control signal to the delay interferometer in such a manner that one of the differential detection voltages is a maximum and the other is a minimum. Consequently, it is possible to stably receive the transmission light signal without modulating the control signal of the delay interferometer.

A seventh aspect of the invention is directed to an optical transmitter for transmitting a transmission light signal which is subjected to an optical phase modulation based on a data signal to be transmitted and has a dither signal superposed thereon, comprising:
a light source capable of superposing the dither signal on an output light in response to a frequency signal; a phase modulating section for carrying out an optical phase modulation over an output light of the light source based on the data signal; and an intensity modulating section for carrying out a light intensity modulation over an output light of the phase modulating section based on a clock signal, thereby outputting the transmission light signal. Consequently, it is possible to stably receive the transmission light signal without modulating the control signal of the delay interferometer.

An eighth aspect of the invention is directed to an optical transmitter for transmitting a transmission light signal which is subjected to an optical phase modulation based on a data signal to be transmitted and has a dither signal superposed thereon, comprising:
a light source; a phase modulating section for carrying out an optical phase modulation over an output light of the light source based on a signal obtained by adding the data signal to the dither signal; and an intensity modulating section for carrying out a light intensity modulation over an output light of the phase modulating section based on a clock signal, thereby outputting the transmission light signal. Consequently, it is possible to stably receive the transmission light signal without modulating the control signal of the delay interferometer.

A ninth aspect of the invention is directed to an optical transmitter for transmitting a transmission light signal which is subjected to an optical phase modulation based on a data signal to be transmitted and has a dither signal superposed thereon, comprising:
a light source; a phase modulating section for carrying out an optical phase modulation over an output light of the light source based on the data signal; and an intensity modulating section for carrying out a light intensity modulation over an output light of the phase modulating section based on a signal obtained by adding a clock signal to the dither signal, thereby outputting the transmission light signal. Consequently, it is possible to stably receive the transmission light signal without modulating the control signal of the delay interferometer.

According to the invention, the following advantages can be obtained.
According to the first, second, third, seventh, eighth and ninth aspects of the invention, the transmission light signal (the optical phase modulation signal) obtained by superposing the dither signal through the delay interferometer is converted into the light intensity modulation signal based on the control signal and the photocurrent flowing to the photodetecting section is detected differentially, and furthermore, the dither signal components are extracted respectively and the delay interferometer is controlled in such a manner that one of the detection voltages is a maximum and the other is a minimum, and both of the dither signal components which are extracted have the minimum amplitude. Thus, it is possible to stably receive the transmission light signal without modulating the control signal of the delay interferometer.

According to the fourth, fifth and sixth aspects of the invention, moreover, the dither signal is superposed on the transmission light signal (the optical phase modulation signal) through the modulator, and the transmission light signal (the optical phase modulation signal) obtained by superposing the dither signal through the delay interferometer is converted into the light intensity modulation signal based on the control signal and the photocurrent flowing to the photodetecting section is detected differentially, and furthermore, the dither signal components are extracted respectively and the delay interferometer is controlled in such a manner that one of the detection voltages is a maximum and the other is a minimum, and both of the dither signal components thus extracted have the minimum amplitude. Thus, it is possible to stably receive the transmission light signal without modulating the control signal of the delay interferometer.
Other features and advantages may be apparent from the following detailed description, the accompanying drawings and the claims.

### BRIEF DESCRIPTION OF THE DRAWINGS

Fig. 1 is a block diagram showing a structure according to an example of an optical receiver in accordance with the invention,
Fig. 2 is a block diagram showing a structure according to an example of an optical transmitter for emitting a transmission light signal,
Fig. 3 is a characteristic curve chart showing a relationship between a control signal (a control voltage) and a detection voltage,
Fig. 4 is a characteristic curve chart showing a relationship between the control signal (the control voltage) and an output of a filter section,
Fig. 5 is a block diagram showing a structure according to another example of the optical transmitter for outputting the transmission light signal,
Fig. 6 is a block diagram showing a structure according to a further example of the optical transmitter for outputting the transmission light signal,
Fig. 7 is a block diagram showing a structure according to another example of the optical receiver for controlling a delay interferometer based on a dither signal component extracted from a differential detection voltage,
Fig. 8 is a block diagram showing a structure according to a further example of the optical receiver for controlling the delay interferometer based on the differential detection voltage,
Fig. 9 is a block diagram showing a structure according to a further example of the optical receiver in the case in which the dither signal is not superposed on the transmission light signal (the optical phase modulation signal),
Fig. 10 is a block diagram showing a structure according to an example of a conventional optical receiver,
Fig. 11 is a block diagram showing a structure according to another example of the conventional optical receiver, and
Fig. 12 is a characteristic curve chart showing a relationship between a control signal (a control voltage) and a light signal power.

### DETAILED DESCRIPTION

The invention will be described below in detail with reference to the drawings. Fig. 1 is a block diagram showing a structure according to an example of an optical receiver in accordance with the invention.
In Fig. 1, 14 denotes an optical transmission line such as an optical fiber, 15 denotes a delay interferometer, 16 denotes a photodetecting section such as a photodetector of a balance type in which photodetectors are connected in series, 17 denotes a data clock reproducing section for reproducing and outputting a data signal and a clock signal based on an output of the photodetecting section 16, 18 and 19 denote current detecting sections such as a resistor for detecting, as a voltage, a photocurrent flowing to the photodetecting section 16, 20 and 22 denote filter sections such as a bandpass filter, and 21 and 23 denote control sections.

Moreover, 15, 16, 17, 18, 19, 20, 21, 22 and 23 constitute an optical receiver 53.

A transmission light signal (an optical phase modulation signal) having a dither signal superposed thereon is incident on the delay interferometer 15 through the optical transmission line 14 in response to a single frequency signal set to the outside of a band of a data signal to the transmission light signal (the optical phase modulation signal).

Two lights emitted from the delay interferometer 15 are incident on the individual photodetectors constituting the photodetecting section 16 respectively, and a detection signal of the photodetecting section 16 is applied to an input terminal of the data clock reproducing section 17.

A photocurrent flowing to the photodetecting section 16 is differentially detected as a detection voltage in the current detecting sections 18 and 19. The detection voltage of the current detecting section 18 is applied to the filter section 20 and the control section 21, and furthermore, an output of the filter section 20 is also applied to the control section 21.

Similarly, the detection voltage of the current detecting section 19 is applied to the filter section 22 and the control section 23, and furthermore, an output of the filter section 22 is also applied to the control section 23.

Finally, control signals of the control sections 21 and 23 are applied to control input terminals of the delay interferometer 15 respectively (actually, the control signal is applied to one control input terminal).

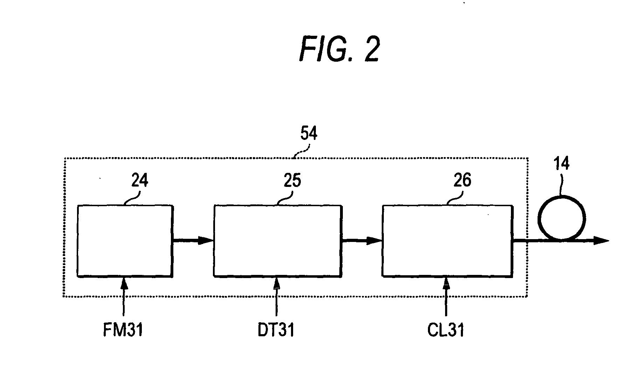

On the other hand, Fig. 2 is a block diagram showing a structure according to an example of the optical transmitter for emitting the transmission light signal having the dither signal superposed thereon which is received in the example shown in Fig. 1.

In Fig. 2, 14 is the same reference numeral as that in Fig. 1, 24 denotes a light source such as a laser beam source which can superpose the dither signal on an output light by carrying out a frequency modulation in response to a single frequency signal set to the outside of the band of the data signal, 25 denotes a phase modulating section for carrying out an optical phase modulation over an input light signal based on the data signal, and 26 denotes an intensity modulating section for carrying out a light intensity modulation over the input light signal based on a clock signal. Moreover, 24, 25 and 26 constitute an optical transmitter 54.

An output light of the light source 24 is incident on the phase modulating section 25 and a light emitted from the phase modulating section 25 is incident on the intensity modulating section 26. A light emitted from the intensity modulating section 26 is transmitted as a transmission light signal through the optical transmission line 14.

Moreover, a frequency signal indicated as "FM31" in Fig. 2 is applied to a control input terminal of the light source 24, a data signal indicated as "DT31" in Fig. 2 is applied to a control input terminal of the phase modulating section 25, and a clock signal indicated as "CL31" in Fig. 2 is applied to a control input terminal of the intensity modulating section 26.

Description will be given to an operation according to the examples shown in Figs. 1 and 2. For simplicity of the explanation, the example shown in Fig. 2 will be first described.

In the optical transmitter 54 shown in Fig. 2, the dither signal is superposed on the output light of the light source 24 through the frequency modulation in response to the single frequency signal set to the outside of the band of the data signal indicated as "FM31" in Fig. 2, and the output light of the light source 24 on which the dither signal is superposed is subjected to a phase modulation based on the data signal indicated as "DT31" in Fig. 2 in the phase modulating section 25.

Furthermore, the output light of the phase modulating section 25 is changed into an optical pulse based on the clock signal indicated as "CL31" in Fig. 2 in the intensity modulating section 26 and the optical pulse is emitted as the transmission light signal having the dither signal superposed thereon (the optical phase modulation signal) to the optical transmission line 14.

On the other hand, in the optical receiver 53 shown in Fig. 1, the transmission light signal (the optical phase modulation signal) which has the dither signal superposed thereon and is propagated through the optical transmission line 14 is converted into the light intensity modulation signal based on the control signal through the delay interferometer 15 and the light intensity modulation signal is incident on the photodetecting section 16.

The data clock reproducing section 17 reproduces and outputs the data signal and the clock signal based on the output of the photodetecting section 16. Moreover, the photocurrent flowing to the photodetecting section 16 is differentially detected as the detection voltage through the current detecting sections 18 and 19.

The dither signal component which is superposed is extracted through the filter section 20 from the detection voltage output from the current detecting section 18 and the detection voltage is applied to the control section 21, and furthermore, the detection voltage output from the current detecting section 18 is directly applied to the control section 21.

The dither signal component which is superposed is extracted through the filter section 22 from the detection voltage output from the current detecting section 19 and the detection voltage is applied to the control section 23, and furthermore, the detection voltage output from the current detecting section 19 is directly applied to the control section 23.

The control sections 21 and 23 determine control signals (control voltages) and apply them to the delay interferometer 15 in such a manner that one of the detection voltages applied directly is a maximum and the other is a minimum, and both of the dither signal components which are extracted have a minimum amplitude because the control signal level which is obtained is inverted.

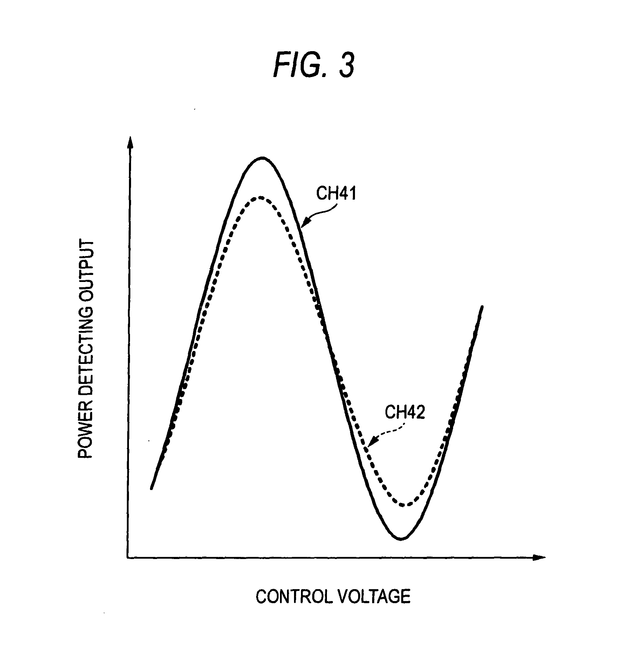

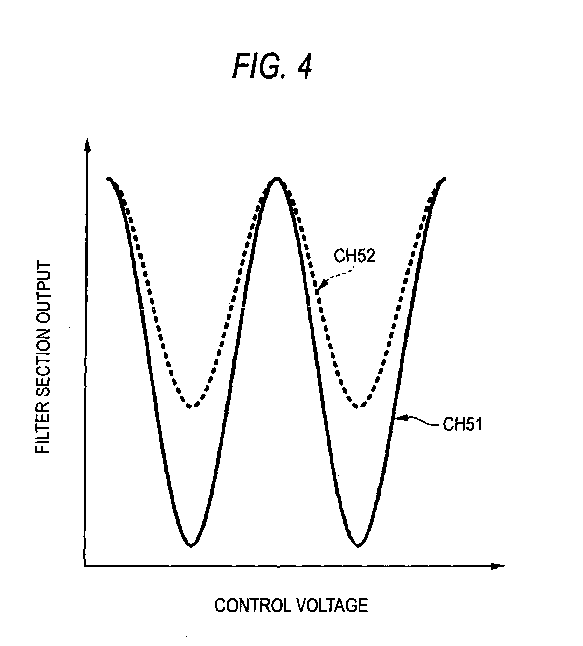

Fig. 3 is a characteristic curve chart showing a relationship between the control signal (the control voltage) and the detection voltage in the current detecting section 18 or 19 and Fig. 4 is a characteristic curve chart showing a relationship between the control signal (the control voltage) and the output of the filter section 20 or 22.

Moreover, "CH41" in Fig. 3 and "CH51" in Fig. 4 indicate characteristic curves in the case in which an optical noise such as ASE (Amplified Spontaneous Emission) generated in an amplification of a light signal in the optical transmission line is not superposed, and "CH42" in Fig. 3 and "CH52" in Fig. 4 indicate characteristic curves in the case in which the optical noise is superposed respectively.

As is apparent from Figs. 3 and 4, when the optical noise is superposed, a detection sensitivity on an optimum point for stably receiving the transmission light signal (the optical phase modulation signal) is lessened. By differentially carrying out the operation as shown in Fig. 1, however, the influence of the optical noise can be reduced. As a result, the establishing time can be shortened.

As a result, by converting the transmission light signal (the optical phase modulation signal) having the dither signal superposed thereon into the light intensity modulation signal based on the control signal and differentially detecting the photocurrent flowing to the photodetecting section as the detection voltage through the delay interferometer, and further extracting the dither signal components respectively and controlling the delay interferometer in such a manner that one of the detection voltages is a maximum and the other is a minimum, and both of the dither signal components which are extracted have a minimum amplitude, it is possible to stably receive the transmission light signal without modulating the control signal of the delay interferometer.

For simplicity of the description in the example shown in Fig. 1, there are provided two control sections for applying the detection voltages which are detected differentially. As a matter of course, the detection voltage which is differentially detected by one control section may be applied to control the delay interferometer.

While the dither signal is superposed on the output light of the light source 24 through the frequency modulation in response to the single frequency signal set to the outside of the band of the data signal in the example of the optical transmitter shown in Fig. 2, moreover, the dither signal may be superposed on the data signal applied to the phase modulating section 25.

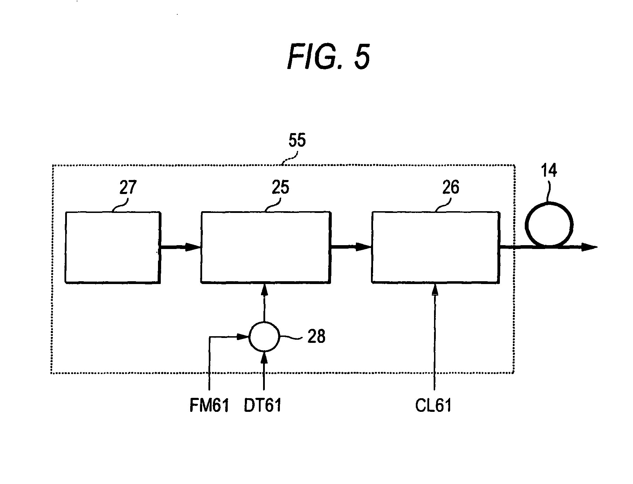

Fig. 5 is a block diagram showing a structure according to another example of the optical transmitter for outputting the transmission light signal received in the example shown in Fig. 1. In Fig. 5, 14, 25 and 26 are the same reference numerals as those in Fig. 2, and 27 denotes a light source such as a laser beam source and 28 denotes an adder. Moreover, 25, 26, 27 and 28 constitute an optical transmitter 55.

An output light of the light source 27 is incident on the phase modulating section 25, and a light emitted from the phase modulating section 25 is incident on the intensity modulating section 26. A light emitted from the intensity modulating section 26 is transmitted through the optical transmission line 14.

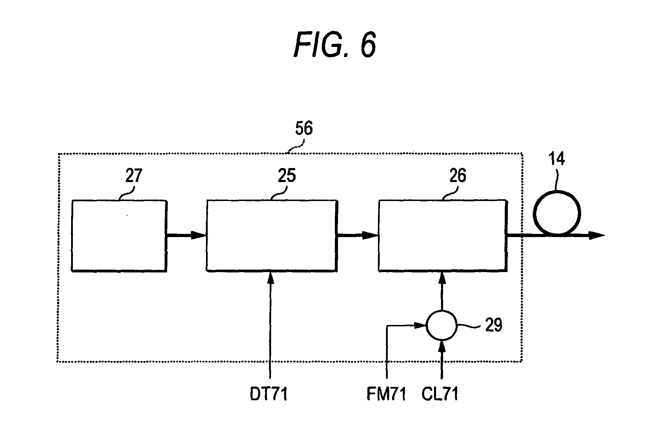

Moreover, a data signal indicated as "DT61" in Fig. 5 is applied to one of input terminals of the adder 28, a dither signal indicated as "FM61" in Fig. 5 is applied to the other input terminal of the adder 28, and an output of the adder 28 is applied to a control input terminal of the phase modulating section 25. A clock signal indicated as "CL61" in Fig. 6 is applied to a control input terminal of the intensity modulating section 26.

An operation according to the example shown in Fig. 5 will be described simply. In the phase modulating section 25, a phase modulation is carried out based on a signal obtained by adding, to a data signal, a dither signal set to an outside of a band of the data signal so that the dither signal is superposed on the transmission light signal output from the optical transmitter 55.

As a result, the transmission light signal output from the optical transmitter 55 shown in Fig. 5 is received by the optical receiver 53 shown in Fig. 1 as described above, and the transmission light signal can be received stably without a modulation of the control signal of the delay interferometer.

While the dither signal is superposed on the output light of the light source 24 through the frequency modulation in response to the single frequency signal set to the outside of the band of the data signal in the example of the optical transmitter shown in Fig. 2, moreover, the dither signal may be superposed on the clock signal to be applied to the intensity modulating section 26.

Fig. 6 is a block diagram showing a structure according to another example of the optical transmitter for outputting the transmission light signal received in the example illustrated in Fig. 1. In Fig. 6, 14, 25, 26 and 27 are the same reference numerals as those in Fig. 5, and 29 denotes an adder. Moreover, 25, 26, 27 and 29 constitute an optical transmitter 56.

An output light of the light source 27 is incident on the phase modulating section 25, and a light emitted from the phase modulating section 25 is incident on the intensity modulating section 26. A light emitted from the intensity modulating section 26 is transmitted through the optical transmission line 14.

Moreover, a data signal indicated as "CT71" in Fig. 6 is applied to a control input terminal of the phase modulating section 25. Furthermore, a clock signal indicated as "CL71" in Fig. 6 is applied to one of input terminals of the adder 29 and a dither signal indicated as "FM71" in Fig. 6 is applied to the other input terminal of the adder 29, and an output of the adder 29 is applied to a control input terminal of the intensity modulating section 26.

An operation according to the example shown in Fig. 6 will be described simply. In the intensity modulating section 26, an intensity modulation is carried out based on a signal obtained by adding, to a clock signal, a dither signal set to an outside of a band of the data signal so that the dither signal is superposed on the transmission light signal output from the optical transmitter 56.

As a result, the transmission light signal output from the optical transmitter 56 shown in Fig. 6 is received by the optical receiver 53 shown in Fig. 1 as described above, and the transmission light signal can be received stably without a modulation of the control signal of the delay interferometer.

While the control section controls the delay interferometer based on the differential detection voltage and the dither signal component extracted from the differential detection voltage in the example of the optical receiver shown in Fig. 1, moreover, the delay interferometer may be controlled based on either the differential detection voltage or the dither signal component extracted from the differential detection voltage.

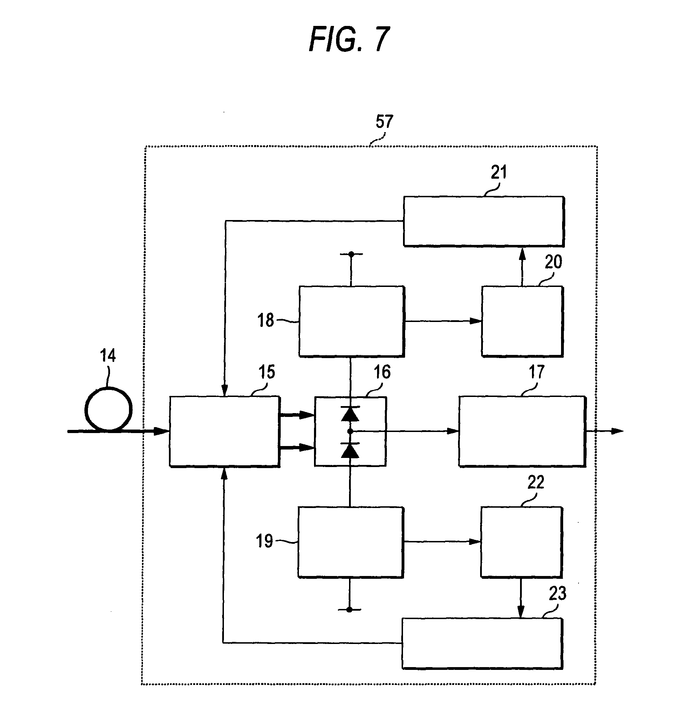

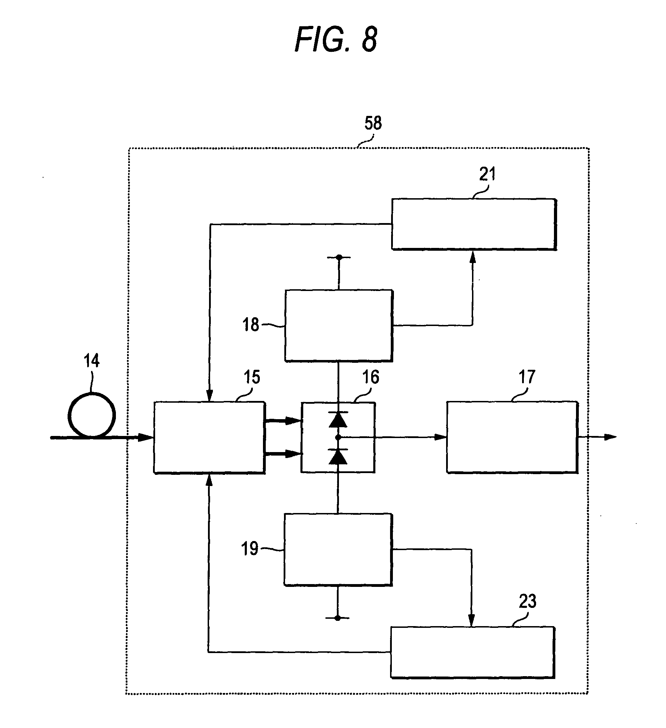

Fig. 7 is a block diagram showing a structure according to another example of the optical receiver for controlling the delay interferometer based on the dither signal component extracted from the differential detection voltage, and Fig. 8 is a block diagram showing a structure according to a further example of the optical receiver for controlling the delay interferometer based on the differential detection voltage.

In Fig. 7, 14, 15, 16, 17, 18, 19, 20, 21, 22 and 23 are the same reference numerals as those in Fig. 1. Moreover, 15, 16, 17, 18, 19, 20, 21, 22 and 23 constitute an optical receiver 57.

In Fig. 7, a basic connecting relationship is the same as that in the example shown in Fig. 1 and is different in that the connecting circuit from the current detecting section 18 to the control section 21 and the connecting circuit from the current detecting section 19 to the control section 23 are eliminated.

In Fig. 8, moreover, 14, 15, 16, 17, 18, 19, 21 and 23 are the same reference numerals as those in Fig. 1. Moreover, 15, 16, 17, 18, 19, 21 and 23 constitute an optical receiver 58.

In Fig. 8, a basic connecting relationship is the same as that in the example shown in Fig. 1 and is different in that the filter section 20 and the connecting circuit, and the filter section 22 and the connecting circuit are eliminated.

Although it is an object to stably receive the transmission light signal (the optical phase modulation signal) having the dither signal superposed through the frequency modulation in response to the single frequency signal set to the outside of the band of the data signal without modulating the control signal of the delay interferometer in the optical receiver shown in Fig. 1, moreover, the dither signal does not need to be superposed on the transmission light signal (the optical phase modulation signal).

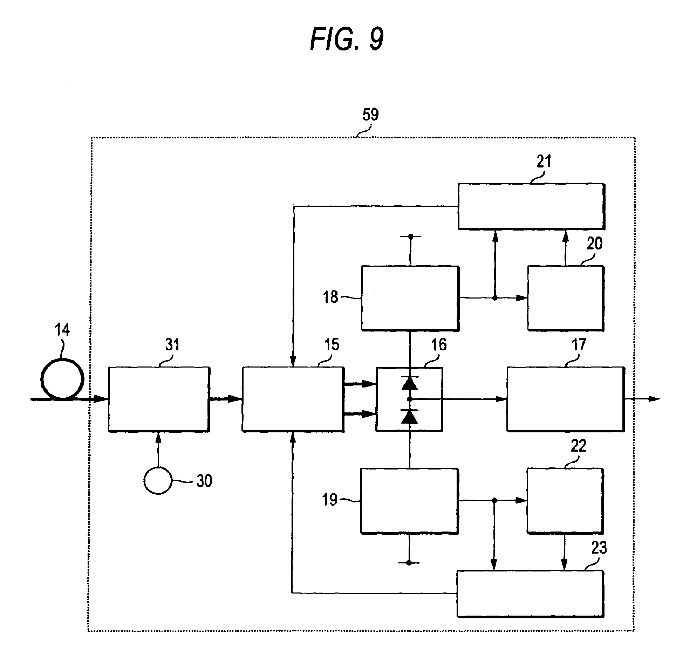

More specifically, Fig. 9 is a block diagram showing a structure according to a further example of the optical receiver in the case in which the dither signal is not superposed on the transmission light signal (the optical phase modulation signal). In Fig. 9, 14, 15, 16, 17, 18, 19, 20, 21, 22 and 23 are the same reference numerals as those in Fig. 1, and 30 denotes an oscillator for outputting a single frequency signal set to an outside of a band of a data signal and 31 denotes a modulator. Moreover, 15, 16, 17, 18, 19, 20, 21, 22, 23, 30 and 31 constitute an optical receiver 59.

In Fig. 9, a basic connecting relationship is the same as that in the example shown in Fig. 1 and is different in that the modulator 31 is provided in a first stage of the delay interferometer 15 and an output of the oscillator 30 (the single frequency signal set to the outside of the band of the data signal) is applied to a control input terminal of the modulator 31.

In this case, the dither signal is superposed on a transmission light signal (an optical phase modulation signal) which is propagated from a certain optical transmitter through the optical transmission line 14 and has no dither signal superposed thereon through a frequency modulation in response to a signal output from the oscillator 30 in the modulator 31 in the first stage. Therefore, it is possible to stably receive the transmission light signal without modulating the control signal of the delay interferometer through an optical receiver in a second stage from the modulator 31 (which corresponds to the optical receiver 53 shown in Fig. 1).

As a result, by superposing the dither signal on the transmission light signal (the optical phase modulation signal) through the modulator, converting the transmission light signal (the optical phase modulation signal) having the dither signal superposed thereon into the light intensity modulation signal based on the control signal and differentially detecting the photocurrent flowing to the photodetecting section as the detection voltage through the delay interferometer, extracting the dither signal components respectively and controlling the delay interferometer in such a manner that one of the detection voltages is a maximum and the other is a minimum, and both of the dither signal components which are extracted have a minimum amplitude, it is possible to stably receive the transmission light signal without modulating the control signal of the delay interferometer.

While the control section controls the delay interferometer based on the differential detection voltage and the dither signal component extracted from the differential detection voltage in the example of the optical receiver shown in Fig. 9, moreover, the delay interferometer may be controlled based on either the differential detection voltage or the dither signal component extracted from the differential detection voltage.

Moreover, the frequency modulation used for suppressing stimulated brillouin scattering and the frequency modulation used as the control signal of the delay interferometer are intended differently from each other.

## Claims

1. An optical receiver for receiving a transmission light signal which is subjected to an optical phase modulation based on a data signal to be transmitted and has a dither signal superposed thereon, comprising:
a delay interferometer to which the transmission light signal having the dither signal superposed thereon is applied and which converts the transmission light signal into a light intensity modulation signal based on a control signal;
a photodetector for converting two light outputs of the delay interferometer into an electric signal;
first and second current detecting sections for differentially detecting a photocurrent flowing to the photodetector as a detection voltage;
a data clock reproducing section for outputting the data signal and a clock signal based on an output of the photodetector;
first and second filter sections for extracting dither signal components of outputs of the first and second current detecting sections respectively; and
a control section for determining the control signal and applying the control signal to the delay interferometer in such a manner that both of the dither signal components which are extracted have a minimum amplitude.

2. An optical receiver for receiving a transmission light signal which is subjected to an optical phase modulation based on a data signal to be transmitted and has a dither signal superposed thereon, comprising:
a delay interferometer to which the transmission light signal having the dither signal superposed thereon is applied and which converts the transmission light signal into a light intensity modulation signal based on a control signal;
a photodetector for converting two light outputs of the delay interferometer into an electric signal;
first and second current detecting sections for differentially detecting a photocurrent flowing to the photodetector as a detection voltage;
a data clock reproducing section for outputting the data signal and a clock signal based on an output of the photodetector; and
a control section for determining the control signal and applying the control signal to the delay interferometer in such a manner that one of the differential detection voltages is a maximum and the other is a minimum.

3. The optical receiver according to claim 1, further comprising:
first and second filter sections for extracting dither signal components of outputs of the first and second current detecting sections respectively,
wherein the control section determines the control signal and applies the control signal to the delay interferometer in such a manner that one of the differential detection voltages is a maximum and the other is a minimum, and both of the dither signal components which are extracted have a minimum amplitude.

4. An optical receiver for receiving a transmission light signal which is subjected to an optical phase modulation based on a data signal to be transmitted, comprising:
a modulator for superposing a dither signal on the transmission light signal based on an output of an oscillator;
a delay interferometer for converting an output of the modulator into a light intensity modulation signal based on a control signal;
a photodetector for converting two light outputs of the delay interferometer into an electric signal;
first and second current detecting sections for differentially detecting a photocurrent flowing to the photodetector as a detection voltage;
a data clock reproducing section for outputting the data signal and a clock signal based on an output of the photodetector;
first and second filter sections for extracting dither signal components of outputs of the first and second current detecting sections respectively; and
a control section for determining the control signal and applying the control signal to the delay interferometer in such a manner that both of the dither signal components which are extracted have a minimum amplitude.

5. An optical receiver for receiving a transmission light signal which is subjected to an optical phase modulation based on a data signal to be transmitted, comprising:
a modulator for superposing a dither signal on the transmission light signal based on an output of an oscillator;
a delay interferometer for converting an output of the modulator into a light intensity modulation signal based on a control signal;
a photodetector for converting two light outputs of the delay interferometer into an electric signal;
first and second current detecting sections for differentially detecting a photocurrent flowing to the photodetector as a detection voltage;
a data clock reproducing section for outputting the data signal and a clock signal based on an output of the photodetector; and
a control section for determining the control signal and applying the control signal to the delay interferometer in such a manner that one of the differential detection voltages is a maximum and the other is a minimum.

6. The optical receiver according to claim 4, further comprising:
first and second filter sections for extracting dither signal components of outputs of the first and second current detecting sections respectively,
wherein the control section determines the control signal and applies the control signal to the delay interferometer in such a manner that one of the differential detection voltages is a maximum and the other is a minimum, and both of the dither signal components which are extracted have a minimum amplitude.

7. An optical transmitter for transmitting a transmission light signal which is subjected to an optical phase modulation based on a data signal to be transmitted and has a dither signal superposed thereon, comprising:
a light source capable of superposing the dither signal on an output light through a frequency modulation in response to a frequency signal;
a phase modulating section for carrying out an optical phase modulation over an output light of the light source based on the data signal; and
an intensity modulating section for carrying out a light intensity modulation over an output light of the phase modulating section based on a clock signal, thereby outputting the transmission light signal.

8. An optical transmitter for transmitting a transmission light signal which is subjected to an optical phase modulation based on a data signal to be transmitted and has a dither signal superposed thereon, comprising:
a light source;
a phase modulating section for carrying out an optical phase modulation over an output light of the light source based on a signal obtained by adding the data signal to the dither signal; and
an intensity modulating section for carrying out a light intensity modulation over an output light of the phase modulating section based on a clock signal, thereby outputting the transmission light signal.

9. An optical transmitter for transmitting a transmission light signal which is subjected to an optical phase modulation based on a data signal to be transmitted and has a dither signal superposed thereon, comprising:
a light source;
a phase modulating section for carrying out an optical phase modulation over an output light of the light source based on the data signal; and
an intensity modulating section for carrying out a light intensity modulation over an output light of the phase modulating section based on a signal obtained by adding a clock signal to the dither signal, thereby outputting the transmission light signal.
